# EUROPEAN PATENT SPECIFICATION

(11) **EP 4 016 416 B1**
(45) Date of publication and mention of the grant of the patent: **17.12.2025**
(21) Application number: 21204043.0
(22) Date of filing: 21.10.2021
(51) Int. Cl.: G06Q 10/06, G06Q 50/02, G06V 10/20, G06V 20/52, G06Q 10/0631, G06V 20/68

(54) **METHOD FOR OPERATING ON AN ENVIRONMENT**
VERFAHREN ZUM ARBEITEN IN EINER UMGEBUNG
MÉTHODE D'INTERVENTION SUR UN ENVIRONNEMENT

(30) Priority: 18.12.2020 IT 202000031505
(43) Date of publication of application: 22.06.2022
(73) Proprietor: Geoinference S.r.l., 38068 Rovereto, (TN) (IT)
(72) Inventor: Maffione, Eugenio Maria, 38068 Rovereto TN (IT); Demaria, Andrea, 38068 Rovereto TN (IT)
(74) Representative: Perani & Partners S.p.A.

(56) References cited:
- US-A1- 2019 150 357
- US-A1- 2020 117 897
- US-A1- 2020 364 456

## Description

### Technical field

The present invention relates to a method for periodically operating on an environment, such as a field or an orchard, as a function of information captured about the environment. The present invention further addresses a system that can implement the method of operating on the environment.

### Background art

Environments are known in the art to be monitored periodically, at predetermined times, using cameras to identify certain characteristics of the environment, such as the size and/or the number of the fruits. Alternatively, periodic inspections are also carried out visually by one or more operators. After such monitoring activity, according to prior art techniques, the operator operates on the environment based on the detected characteristics, for example by pruning the trees or harvesting the fruits. Such operations are decided based on the expertise of the operator and/or on recommendations/guidelines that can be generated from the analysis of the captured images only. Later, the operations that have been performed are noted down by the operator in a logbook. Thus, all the operations performed by the operators may be tracked.

The following documents exemplify prior art systems: US 2020/364456 A1 discloses a drone that inspects agricultural fields, in which image data is correlated with sensor data in a machine learning algorithm to monitor the field, estimate growth and take actions, such as fertilizer adjustments or defining harvesting schedules. US 2019/150357 A1 discloses a harvester with an image sensor. Data are processed with a convolutional neural network to influence the operation of the harvester. US 2020/117897 A1 discloses generating training data for agricultural field management based on artificial intelligence to identify pests and parasites in crops with bounding boxes.

### Problems of the prior art

Besides increasing operating times, the prior art methods of operating on an environment lead to bias errors in the operation on the environment.

That is, monitoring at fixed times may be performed before the occurrence of phenomena associated with the relevant operations or too late with respect to the time when the operations are actually needed. This leads to a waste of time and resources and to possible long-term damage of the environment, for example of a crop.

Furthermore, improper performance of operations may be aggravated by a wrong acquisition of the particular characteristics of an environment and by an approximate and inaccurate analysis thereof.

It should also be noted that the prior art techniques are not able to optimize the operating steps, for example by calibrating the operations to be performed from previous results.

### Object of the invention

The object of the present invention is to provide a method of operating on an environment that can obviate the above discussed drawbacks of the prior art.

Namely, the object of the present invention is to provide a method that can have an active influence on monitoring and on the operations to be performed on an environment by optimizing the operating times and the types of operations.

The aforementioned technical purpose and objects are substantially fulfilled by a method of operating on an environment and by a system for operating on an environment, that comprise the technical features as disclosed in one or more of the accompanying claims.

### Benefits of the invention

Advantageously, the method and the system of the present invention can reduce operating costs resource expenditure.

Advantageously, the method and the system of the present invention can reduce bias errors in operation by providing active performance of monitoring and operations.

Advantageously, the method and the system can simplify the work on an environment.

Advantageously, the method and the system can act on an environment not only based on feedbacks from the environment, but also accounting for other environments having similar characteristics and on which similar operations have been previously performed.

### BRIEF DESCRIPTION OF FIGURES

Further features and advantages of the present invention will result more clearly from the illustrative, non-limiting description of a preferred, non-exclusive embodiment of a method and a system for operating on an environment as shown in the accompanying drawings:
- Figure 1 shows a block diagram of the method of operating on an environment according to one embodiment of the present invention;
- Figure 2 shows a block diagram of a system for operating on an environment according to one embodiment of the present invention;
- Figure 3 shows a detail for operating on an environment according to one embodiment of the present invention.

### DETAILED DESCRIPTION

Even when not expressly stated, the individual features as described with reference to the particular embodiments shall be intended as auxiliary to and/or interchangeable with other features described with reference to other exemplary embodiments.

The present invention relates to a method of operating on an environment 100. Preferably, the method of operating on an environment 100 is carried out by a system for operating on an environment 1000 as further described hereinbelow. The method of the present invention affords active operation on an environment 10 by optimizing the required resources and reducing the possible errors of operation on the environment 10.

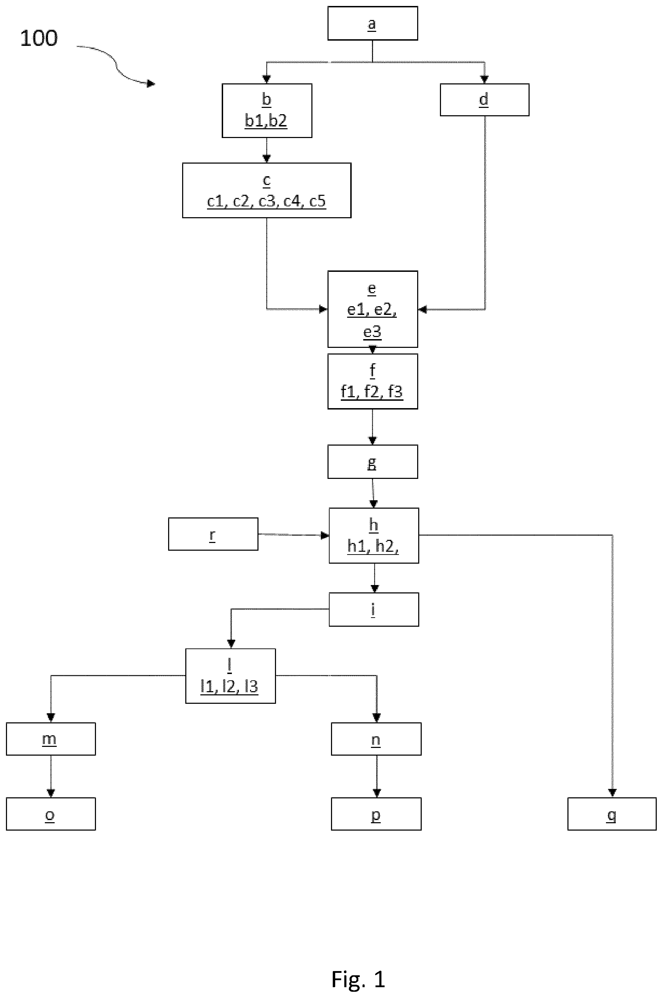

The method of operating on an environment 100 of the present invention comprises the following steps, that are carried out according to a preferred embodiment as shown in Figure 1.

The method of operating on an environment 100 comprises a step of a) selecting an environment to be controlled 10, preferably for monitoring it and performing one or more operations thereon. Namely, step a) includes selecting at least one environment 10 from a plurality of available environments. As used herein, an environment 10 refers to any selectable place that can be actively acted upon by monitoring and with operations, for example an orchard and/or an agricultural field.

Preferably, the method of operating on the environment 100 may be carried out, in parallel or temporally offset fashion, on a plurality of environments, by selecting more than one of them in step a). Thus, as explained below, the method of operating on the environment 100 can integrate information from one or more environments for active operation.

**In** accordance with a preferred embodiment, the step a) includes selecting the environment 10 from a list of environments preferably having particular characteristics associated therewith, for example surface area, geographic location, movement paths inside it and/or type of field/fruit. Preferably, the list of environments is loaded in a central processing unit 1400 and available for selection by a user or an algorithm. More preferably, the peculiar characteristics may be determined by a step of analysis of the selected environment by means of imaging devices 1100 that can be moved within the selected environment 10 or other suitable devices such as satellite or aerial views.

The method comprises the step of b) capturing, by means of at least one imaging device 1100, one or more image streams of targets 20 in the selected environment 10.

As used herein, a target 20 refers to any object, subject and entity in an environment 10. For example, a target 20 may refer to fruit and vegetables and/or persons and/or animals and/or vehicles.

According to a preferred embodiment, step b) includes capturing image streams in which pixels are associated with each image. Preferably, the image streams comprise two-dimensional color images of the environment 20 and/or information about the distance of each pixel of the images from a reference frame defined by the imaging device 1100. Specifically, the step b) includes capturing image streams in the field of View (FOV) of the imaging device 1100.

According to a preferred embodiment, the step b) comprises a step of b1) sending the image streams to a data processing unit 1110. Namely, the step b1) of sending includes sending the captured image streams from the imaging device 1100 to the data processing unit 1110 in signal communication with the imaging device 1100. More preferably, the step b) comprises a step of b2) at least temporarily storing the image streams in the data processing unit 1110. In particular, the temporary storage of the image stream optimizes computational resources for the subsequent steps.

According to a preferred embodiment, the step b) includes capturing a first image stream and a second image stream. In particular, the first image stream relates to the environment 10. Preferably, the first image stream comprises the two-dimensional color images of the environment 10. On the other hand, the second image flow relates to the distances of the pixels from the reference frame. Preferably, the method of operating on the environment 100 comprises a step of b2) synchronizing the first image stream and the second image stream. Preferably, the step of b2) synchronizing includes associating each pixel of the images of the first image stream with a corresponding distance value of the second image stream. Then, the step b) includes storing the synchronization between the first image streams and the second image stream which has been performed in the step of synchronizing.

The method of operating on the environment 100 comprises the step of c) generating, by at least one imaging device 1100, one or more environment-representative signals Set1. Specifically, the environment-representative signals comprise information about the selected environment 10.

According to a preferred embodiment, the step c) comprises a step of c1) recognizing targets 20 arranged in the environment 100 from the image streams that have been captured, preferably from the first image stream. More preferably, the step of recognizing c1) includes analyzing each image, or each frame, of the first image stream to recognize the targets 20 in the corresponding image. It should be noted that the step of recognizing c1) includes recognizing one or more targets 20 with respect to a background.

Preferably the step c) is carried out by a neural network-based algorithm associated with the environment. In detail, the neural network-based algorithm is optimized by size, namely quantized. Preferably, the neural network-based algorithm is trained to recognize one or more targets 20 in the images of the first image stream. More preferably, the neural network-based algorithm is configured, in other words trained, to recognize specific targets 20 based on the environment 10. For example, if capturing of the first image stream occurs in an orchard, the neural network-based algorithm may be trained to recognize the fruit species in the orchard.

Advantageously, the use of an optimized and quantized neural network-based algorithm configured to recognize targets 20 in a specific environment 10 reduces the required computational cost.

According to a preferred embodiment, the step c) comprises the step of locating the imaging device 1100 to recognize the environment in which the imaging device 1100 is placed. Then, once the environment has been recognized, the step c) comprises a step of loading the neural network-based algorithm suitable for the selected environment. Alternatively, the step of selecting a) includes loading the neural network-based algorithm suitable for the selected environment onto the corresponding imaging device 1100 to use it during the step c).

Advantageously, loading of a specific algorithm allows the method to be adapted to different types of environment while maintaining a reduced computational cost and easier management of specialized neural networks.

According to a preferred embodiment, the step c), following the recognition of the targets 20, includes the steps, carried out in parallel and/or as alternatives, of:
c2) generating count values for any recognized targets with respect to their specific classifications (green apple, yellow apple, ...);
c3) calculating size values for the recognized targets,
c4) calculating relative distance values between the recognized targets.

Preferably, each recognized target 20 is associated with a bounding box, which in turn is associated with coordinates with respect to the reference frame. These coordinates comprise values on the image plane of the first image stream and possibly spatial information associated with the second image stream. Then, the steps c2) and/or c3) and/or c4) are carried out using first analysis algorithms residing in the data processing unit 1110 associated with the imaging device 1100. In particular, the targets 20 are counted as a function of the bounding boxes between successive frames and/or the targets are graded to know for example dimensions or weight and/or the distance between individual targets or target groups as a function of the corresponding bounding boxes.

Finally, the step c) includes the step of defining the environment-representative signal (Set1) as a function of the count values and/or the size values and/or the relative distance values. Preferably, the environment-representative signal is defined by second analysis algorithms residing in the data processing unit 1110. **In** particular, the environment-representative signal Set 1 comprises a plurality of pieces of information about the targets 20 in the environment. For example, the environment-representative signal Set1 may include information about the ripening stage of a fruit given by the combination of the number of fruits in a row, their size and their spacing. Preferably, the environment-representative signal Set1 also comprises time information associated with the data about the captured targets.

Advantageously, the provision of an environment-representative signal Set1 affords targeted operations.

The method of operating on the environment 100 comprises a step d) of capturing, by means of a plurality of sensors 1200, one or more environment datasets Set2. Preferably, the step d) may be carried out in parallel with the step b), before the step b), after the step b) or a combination thereof. More preferably, the step d) is carried out with respect to the step b) according to the type of sensors and hence on the type of data about the environment upon which capturing has been performed.

Preferably, the one or more environment datasets Set2 comprises a first environment dataset Set2a and a second environment dataset Set2b. Specifically, the plurality of sensors 1200 comprises one or more sets of ground sensors 1210, associated with the environment 10 and configured to be in signal communication with the imaging device 1100, and one or more sets of on-board sensors 1220, associated with the imaging device 1100 and in signal communication therewith.

According to a preferred embodiment, the step d) includes capturing a first environment dataset Set2a by the one or more sets of ground sensors 1210. Instead of and/or in addition to the previous embodiment, the step d) includes capturing a second environment dataset Set2b, by one or more sets of on-board sensors 1220. Specifically, during capturing of the environment dataset Set2, the method of the present invention can capture the first and second environment datasets Set2a, Set2b, combine them and integrate them to obtain general and specific information about the environment 10. For example, as the imaging device 1100 moves, mounted on a tractor, the set of on-board sensors 1220 captures location information in the environment 10, whereas the set of ground sensors 1210 captures environment information and transfers it, as described below. to the imaging device 1100 as it moves in the environment. Advantageously, the step d) can capture additional environment information useful for active operation on the environment.

According to a preferred embodiment, the one or more environment datasets Set2 include pressure values, temperature values, humidity values, soil composition values, time information, geographic information, weather information, and relative velocity values of the imaging device with respect to reference points in the environment and location values (for example, GPS). It should be noted that the above types of sensors may be divided both on the set of ground sensors 1210 and on the set of on-board sensors 1220.

The method of operating on the environment 100 comprises a step of e) sending the environment-representative signals Set1 and the environment datasets Set2 to an intermediate processing unit 1300 associated with the imaging device 1100 and in signal communication with the plurality of sensors 1200 and the imaging device 1100.

According to a preferred embodiment, the step e) comprises a step of e1) putting the set of ground sensors 1210 in signal communication with the imaging device 1100 when in the vicinity of the sensors. Once signal communication, preferably Bluetooth communication, is established, the step e) comprises a step of e2) downloading the first environment dataset Set2a into the imaging device 1100. Specifically, the step e2) includes sending the first environment dataset Set2a to the intermediate processing unit 1300. Instead of and/or in addition to the previous embodiment, the step e) comprises a step of e3) directly sending the second environment dataset Set2b captured by the set of on-board sensors 1220 to the intermediate processing unit 1300.

Advantageously, by sending to an intermediate processing unit 1300 the computational cost required for processing in the imaging devices 1100 and in the sensors 1200 may be reduced. Thus, the method can also reduce the overall cost required for the components of the imaging devices 1100 and of the sensors 1200.

The method of operating on the environment 100 comprises a step of f) generating an environment signal Se as a function of the representative signals Set1 and of the environment dataset Set2. This leads to the generation of an environment signal Se which not only accounts for the targets 20 in the environment 10, but also on general and specific information about the environment 20 in which the targets 20 are arranged. Preferably, the environment dataset Set2 also comprises the peculiar characteristics of the environment 20 available from the step a) or following the step of analysis of the selected environment, which are preferably carried out by the imaging device in step b) and/or by the plurality of sensors in step d) for example, by analysis of aerial views.

According to a preferred embodiment, the step f), which is preferably carried out in the intermediate processing unit 1300, comprises a step of f1) selecting one or more environment datasets Set2 that have been received and, later, a step of f2) associating the environment-representative signal Set1 with one or more environment datasets Set2. Finally, the step of f) includes a step of f3) defining the environment signal Se as a function of the association between the environment-representative signal Set1 and the one or more selected environment datasets Set2.

**In** detail, the step f) includes aggregating the environment-representative signal Set1 and one or more environment datasets Set2 to generate the environment signal Se that can be easily handled in the subsequent method steps.

Preferably, the step f) is carried out using third analysis algorithms, residing in the intermediate data processing unit 1300, which afford aggregation of the environment-representative signal Set1 and of the one or more environment datasets Set2.

According to a preferred embodiment, the step f) includes aggregating the first and second environment datasets Set2a, Set2b with the environment-representative signal Set1.

The method of operating on the environment 100 comprises a step g) of sending the environment signal Se to the central processing unit 1400 in signal communication with the intermediate processing unit 1300. Preferably, the signal connection between the intermediate processing unit 1300 and the central processing unit 1400 is provided by means of a connection module 1800. The latter is in signal communication with both the central processing unit 1400 and the intermediate processing unit 1300.

Advantageously, by sending the environment signal Se for later processing, the costs of the intermediate processing unit as well as the computational costs for later processing are reduced.

Preferably, if the method includes selection of multiple environments, the environment signals Se to the central processing unit 1400 may be sent at the same time and/or in temporally offset fashion by each intermediate processing unit 1300 associated with an environment 10 in which the method of the present invention is being carried out.

It should be noted that by managing multiple environment signals Se about different environments, but preferably with particular characteristics in common, such as the same seed or the same type of fruit and vegetable product, the subsequent steps of the method as well as the operations to be performed on the environment may be optimized.

The method of operating on the environment 100 comprises a step of h) comparing the environment signal Se with reference signals Sr associated with the selected environment 10. The way of operating on the environment may be thus defined.

According to a preferred embodiment, the step h) comprises a step of h1) defining comparison ranges Ic as a function of the reference signals Sr associated with the selected environment. The Ic comparison ranges include, for example:
- ranges of surface areas of the selected environment to be considered,
- time ranges,
- ranges of sizes of the targets 20 in the selected environment;
- ranges of relative distances between the targets 20 in the selected environment;
- numerical ranges for the number of targets 20 in the selected environment;
- positioning ranges for the targets 20 with respect to predetermined reference points.

Next, the step h) comprises the step of h2) comparing the environment signal Se with the comparison ranges Ic. For example, in order to check the effectiveness of an apple growth treatment, the method includes comparing the count/grading values before and after treatment with reference values. Likewise, in apple flower cluster thinning, the method can compare between situations before and after treatment to detect whether the thinning achieved the desired effects. According to a further example, it should be noted that the environment signals Se also include time-related information (for example, in April apples have a certain average size) to compare it with the size associated with the comparison ranges Ic.

According to a preferred embodiment, the method of operating on an environment 100 comprises a step of r) defining the reference signals Sr. In particular, the step of r) defining the reference signals comprises the steps of loading the reference signals Sr via a user interface 1500 into the central processing unit 1400. By this arrangement, the reference signals Sr and hence the comparison ranges Ic may be periodically updated.

Alternatively, the step of r) defining the reference signals Sr comprises the step of generating, using fourth analysis algorithms, residing in the central processing unit 1500, the reference signals Sr as a function of environment signals Se associated with the selected environment and/or with additional environments. Specifically, the step of generating the reference signals Sr includes processing the environment signals Se associated with one or more environments and sent to the central processing unit 1500. Thus, the reference signals Sr are automatically updated as a function of the environments 10 and of the operations thereon. It should be noted that the reference signals Sr are generated as a function of the environment signals by processing environment signals Se from environments with similar peculiar characteristics such as type of seed, vegetable or fruit.

According to a preferred embodiment, the method of operating on the environment 100 includes storing any received environment signals, preferably in a storage unit 1900 associated with the central processing unit 1400. In detail, the step of storing includes organizing the stored signals according to the environment 10 and to time parameters (seasons, years, etc.). Preferably, the step of storing includes storing the generated reference signals Sr and the corresponding comparison ranges and organizing them.

Advantageously, the automatic generation of the reference signals Sr affords active operation on the environment with periodic correction of the reference signals Sr and hence the comparison ranges Ic. Also, constant updating of the comparison ranges, as a function of the generation of the reference signals Sr, affords more accurate comparison with the environment signals Se under analysis.

The method of operating on the environment 100 comprises a step of i) generating, using data processing algorithms residing in the central processing unit 1400, as a function of the comparison between the environment signal Se and the reference signals Sr:
- an action signal Sa representative of an operation to be performed on the selected environment 10; or
- a periodic environment monitoring signal Sm.

It should be specifically noted that the step i) can generate a specific signal for operation on the selected environment according to the environment. In other words, from the comparison, the method determines whether one or more corrective operation must be performed on the selected environment or whether, according to the generated signals, the environment needs further monitoring without operations, in other word by repeating the previous steps after a given period of time.

Preferably, the step i) includes generating an action signal Sa or a periodic environment monitoring signal Sm as a function of the comparison of the environment signal Se with one or more comparison ranges Ic. It should be noted that the action signal Sa and the periodic monitoring signal Sm also include information about the start of the subsequent steps, i.e. performing the operations and monitoring the environment.

The method of operating on the environment 100 comprises a step 1) of generating a plurality of operation signals L representative of operations to be performed on the environment 10. Specifically, the plurality of operation signals L is generated as a function of the environment signal Se and if an action signal Sa is generated. In detail, each operation signal L is associated with the action signal Sa and hence with the selected environment by means of the environment signal Se. Preferably, the plurality of operation signals L is determined by selecting from a plurality of predetermined operation signals, representative of known operations that can be performed on the relative environment, one or more signals as a function of the comparison between the environment signal Se and the comparison ranges Ic. More preferably, the step 1) includes defining the plurality of operation signals L by selecting from a plurality of predetermined operation signals one or more signals based on where the environment signal Ic falls in one or more comparison ranges Ic. It should be noted that the (predetermined and non-predetermined) operation signals include indicating a list of operations that are to or may be performed on the environment, as well as information to be sent to the relevant means for performing the operation represented by the signal. According to a preferred embodiment, the step l) comprises the step of 11) sending the plurality of operation signals L to a control device 1600. Preferably, the step includes sending the plurality of operation signals L from the central processing unit 1400 to the intermediate processing unit 1300 and later the control device 1600 in signal communication with the intermediate processing unit 1300 is notified of the list of operations to be performed and how to perform them. It should be noted that the transfer from the central processing unit 1400 to the intermediate processing unit 1300 occurs via the connection module 1800. Alternatively, the step includes sending the plurality of operation signals L from the central processing unit 1400 to the control device 1600 in signal communication with the central processing unit 1400. Specifically, the control device is configured to track the operations to be performed and actually performed and to control their performance as a function of the plurality of operation signals and the corresponding confirmation signals Scon, as explained below.

Next, the step 1) comprises the step of l2) controlling control means (1700) in signal communication with the control device (1600) and configured to act on the environment by means of the plurality of operation signals (L) to perform one or more operations respectively associated with the operation signals L. In detail, the performance step is carried out by control means 1700, for example sprinklers or apple harvesting systems, in signal communication with the control device 1600 and configured to act on the environment. In particular, each operation signal of the plurality of operation signals L comprises a list of instructions for instructing the control means 1700 to operate on an environment. As shown below, the control means 1700, automatically controlled by the operation signals, may be for example tractors that can be moved inside the environment 10 and equipped with a mechanical arm to act on the environment. Alternatively, the control means 1700 may comprise corresponding action devices associated with the control device 1600 and with the operators in charge of performing operations on the environment. Specifically, the step l2) may be carried out by one or more operators, for example peasants, who follow the operation signals shown by the action device to perform one or more operations on the environment. In other words, this alternative step l2) includes showing the operation signals for the operations on the action device so that the operator can perform the operations.

Then, the step 1) comprises the step l3) of generating a confirmation signal Scon by means of the control device 1600 as a function of the operation signals associated with the operations that have been performed. Specifically, each confirmation signal Scon is representative of each operation that has been performed and associated with a respective operation signal. Preferably, if the performance step is carried out by the (automated) control means, the latter are configured to automatically generate a confirmation signal Scon, whereas, if the performance step is carried out by an operator, the generation a confirmation signal Scon is generated by interacting with the action device and by ticking off the operation that has been performed.

Advantageously, the confirmation signals Scon allow the performed operations to be recorded.

According to one embodiment of the present invention, the method of operating on the environment includes sending the periodic monitoring signal Sm to the control device 1600 and/or to the intermediate processing unit to monitor the selected environment 10. Preferably, the periodic monitoring signal Sm comprises at least the time-related instructions for monitoring, as well as the repetition of the previous steps as explained below. More preferably, the periodic monitoring signal Sm comprises instructions to move the control means 1700 inside the environment.

The method of operating on the environment 100 comprises a step of m) generating a first activity completion signal Sc1 as a function of a confirmation signal Scon generated by the control device 1600 for each operation signal of the plurality of operation signals L. Specifically, a first activity completion signal Sc1 is generated if a confirmation signal Scon is generated for each operation signal for performing an operation. Thus, the overall effect of performing operations on the environment may be identified and further operations may be defined in the subsequent steps.

Preferably, the step m) includes generating a first completion signal Sc1 if a confirmation signal Scon has been generated for each operation signal of the plurality of operation signals L. It should be noted that the completion signal Sc1 comprises the operation signals associated with the operations that have been performed. Preferably, the first completion signal Sc1 is sent to the intermediate processing unit 1300 and then to the central processing unit 1400 to optimize the generation of the environment signal Se and/or the reference signals Sr and/or the determination of the plurality of operation signals for subsequent operations on the environment 10 or similar environments.

According to a preferred embodiment, the first completion signal Sc1 is generated by the control device 1600 or the intermediate processing unit 1300, in signal communication with the control device 1600 once the confirmation signals have been received.

The method of operating on the environment 100 comprises a step of n) generating a second activity completion signal Sc2 if the operation signals L have been partially executed. Thus, the partial effect of performing operations on the environment may be identified and further operations may be defined in the subsequent steps.

Preferably, the step n) includes generating a second completion signal Sc2 if a confirmation signal Scon has been generated for part of the operation signals of the plurality of operation signals L. It should be noted that the second completion signal Sc2 comprises the operation signals associated with the operations that have been performed. Preferably, the second completion signal Sc2 is sent to the intermediate processing unit 1300 and then to the central processing unit 1400 to optimize generation of the environment signal Se and/or the reference signals Sr and/or determination of the plurality of operation signals for the subsequent operations on the environment 10 or similar environments.

According to a preferred embodiment, the second completion signal Sc2 is generated by the control device 1600 or the intermediate processing unit 1300, in signal communication with the control device 1600 once the confirmation signals have been received.

This further improves the generation of the environment signal Se and/or the reference signals Sr and/or the determination of the operation signals by accounting for the signals from other environments. Preferably, the method includes aggregating the information concerning the first confirmation signal Sc1 and/or the second confirmation signal Sc2 with the environment signal Se and/or the reference signals Sr and/or determining the operation signals using fifth analysis algorithms, residing in the intermediate processing unit 1300 and/or in the central processing unit 1400.

According to a preferred embodiment, the step of storing includes storing the completion signals Sc1, Sc2, in addition to the aforementioned signals and ranges, in the storage unit 1900 and associating them with the corresponding environment 10 that has been previously stored and organized.

Preferably, the step of storing comprises a step of defining a database for generating the action signals Sa and the periodic environment monitoring signals Sm. In particular, the method includes integrating the information collected in the database for optimized definition of the operations to be performed on the environment by acting on the action signal Sa and on the periodic environment monitoring signal Sm and hence on the plurality of operation signals.

Advantageously, the step of storing determines a database of information useful for proper determination of the operations to be performed on an environment. That is, the database can identify the positive or negative effects of one or more operations on an environment over time, by considering not only the environment in itself by means of the environment-representative signal Set1 and the peculiar characteristics, but also the environment dataset Set2 and information about other environments. For example, such identification of effects includes whether fruit harvesting at a given period of the year with certain weather conditions has positive or negative consequences on the following years, or whether flower cluster thinning performed under certain particular conditions and with certain particular instruments had better or worse effectiveness

The method of operating on the environment 100 comprises a step of o) repeating the steps b)-i) according to a first time period T1 if a first completion signal Sc1 has been generated.

The method of operating on the environment 100 comprises a step of p) repeating the steps b)-i) according to a second time period T2 if a second completion signal Sc2 has been generated.

The method of operating on the environment 100 comprises a step of q) repeating the steps b)-i) according to a third time period T3 if a periodic environment monitoring signal Sm is generated.

Specifically, the steps o), p) and q) include periodic monitoring based on both the operations that have been performed and on the environment 10 itself.

According to a preferred embodiment, the method of operating on the environment 100 comprises a step of generating, using sixth analysis algorithms residing in the central processing unit 1400, the first time period T1, the second time period T2 and the third time period T3 as a function of the peculiar characteristics of the selected environment, such as its surface area and/or the time required for monitoring it, as a function of the completion signals Sc1, Sc2 and of the periodic monitoring signal Sm, as a function of the environment by means of the environment signals Se and as a function of the reference signals Sr.

Advantageously, the step of generating the time periods T1, T2, T3 for monitoring the environment can optimize the operating times and the operations themselves.

According to a preferred embodiment, the method includes storing also the time periods T1, T2, T3, to define the database.

According to a preferred embodiment, the method of operating on an environment 100 comprises the step of defining the data processing algorithms residing in the central processing unit 1400 and in the processing unit 1110 associated with the imaging devices. Preferably, the step of defining the data processing algorithms comprises the steps of loading one or more data processing algorithms via a user interface 1500 into the central processing unit 1400, the data processing algorithms being associated with the selected environment 10. More preferably, the step of defining the algorithms includes loading and defining the data processing algorithms and the first to sixth analysis algorithms, as well as the neural network-based algorithms. It should be noted that the step of defining the data processing algorithms also includes loading the plurality of predetermined operation signals representative of the list of predetermined operations. Preferably, the loaded algorithms are characterized by the inputs required for execution thereof, as well as by the presence of expected values to properly generate the action signal Sa and the periodic monitoring signal Sm.

Advantageously, the use of different algorithms associated with each module affords simple interaction with the individual units and/or modules of the system if changes have to be made to the algorithms in use or control operations have to be performed.

According to a preferred embodiment, the method includes capturing environment information, comprising morphological information about the soil and aerial and/or satellite views, by means of sensors located outside the environment. This information is sent to the central processing unit 1400 and integrated, if necessary, in the generation/definition of the action signals Sa, the periodic monitoring signals Sm, the reference signals, the comparison ranges Ic and/or the plurality of operation signals L.

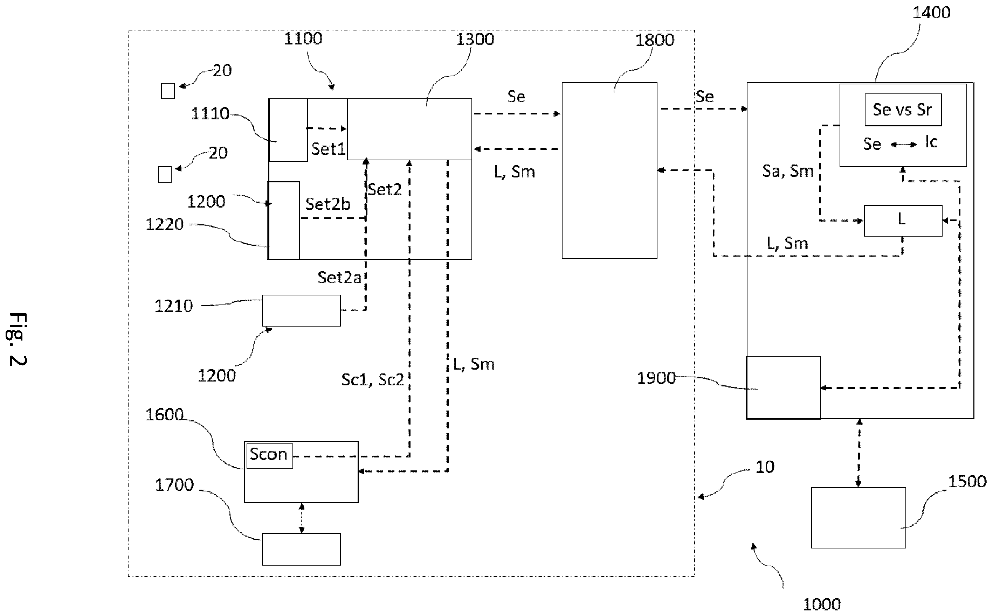

The present invention further relates to a system for operating on an environment 1000 as shown in Figure 2.

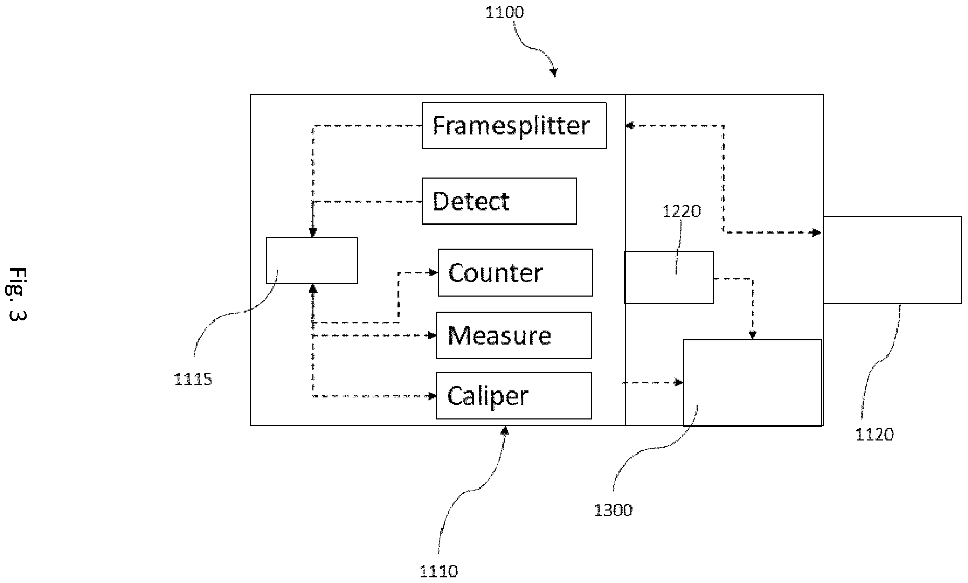

The system for operating on the environment 1000 comprises one or more imaging devices 1100, as shown in Figure 3, which are configured to capture image streams of the environment 10. Preferably, the imaging device 1100 includes a camera 1120 configured to capture the image streams. More preferably, the camera 1120 is configured to capture the first image stream and preferably also the second image stream. In particular, the camera 1120 is configured to capture images of the environment in which it is located.

According to a preferred embodiment, the camera 1120 comprises optical sensors, for example of RGB type for color pickup of the first image stream, and preferably one or more infrared sensors for infrared shooting. Preferably, the sensors comprise a global shutter, having no motion blur in moving shots. The sensors may have a specific Field of View (FOV) representing the horizontal and vertical viewing angle supported by each sensor. In other words, the optical sensors and the infrared sensors have an FOV that can determine the imaged area given a distance of the imaged environment.

According to a preferred embodiment, the use of optical and infrared sensors can generate, thanks to the method, a combined image stream in which each pixel of the first image stream is associated with a distance value, if available according to the above described steps.

Preferably, the camera 1120 is configured to operate with an adjustable frame rate and according to the environment in which the camera 1120 is placed, as well as according to possible movements of the camera with respect to the environment or vice versa.

According to an alternative embodiment, the imaging device comprises a camera for two-dimensional color shots (first image stream) and depth sensors (second image stream). Advantageously, the monitoring method 100 allows combination of the first and second image streams. According to a preferred embodiment, the camera is of the RGB-D type

It should be noted that the system for operating on an environment 1000 comprises a plurality of imaging devices 1100 arranged in the selected environment 10 and/or designed to move therein. Preferably, the system for operating on an environment 1000 comprises a plurality of imaging devices 1100 arranged in one or more environments for simultaneous or offset capturing of image streams of each environment.

The system for operating on an environment 1000 comprises a data processing unit 1110 associated with each imaging device 1100. Preferably, each imaging device 1100 comprises a data processing unit 1110 in signal communication with the camera 1120. The data processing unit 1120 is configured to receive the image streams and process them by carrying out the above steps of the method 100.

According to a preferred embodiment, the data processing unit 1110 comprises a memory module 1115 configured to receive data, such as the first image stream and the second image stream, and processed data such as the bounding boxes and save them. Preferably, the data processing unit 1110 comprises a synchronization module (Framesplitter), in signal communication with the memory module 1115, and configured to synchronize the first image stream and the second image stream, if any. This synchronization module Framesplitter is also configured to save the synchronizations on the memory module 1115. The data processing unit 1110 further comprises a detection module (Detect), in signal communication with the memory module 1115 and configured to recognize targets and associate corresponding bounding boxes with the recognized targets 20. Preferably, the neural network-based algorithm resides in the detection module, Detect. More preferably, the detection module Detect is in signal communication with a geolocation module to receive a specific neural network-based algorithm according to the selected environment. It should be noted that the detection module Detect is configured to save the recognized targets 20 and the generated bounding boxes in the memory module 1115.

According to the embodiment, the data processing unit 1110 comprises:
- a counting module (Counter) in signal communication with the memory module 1115 and configured to carry out the step c2). The counting module Counter is also configured to save the data generated in the memory module 1115; and/or
- a grading module (Caliper) in signal communication with the memory module 1115 and configured to carry out the step c3). The grading module Caliper is also configured to save the data generated in the memory module 1115;
- a measuring module (Measure) in signal communication with the memory module 1115 and configured to carry out the step c4) and save it in the memory module 1115.

Advantageously, the method of operating on the environment 100 can reduce the necessary computational cost and resource expenditure by allowing on-site use of the imaging device, at EDGE level, requiring power supply only. In particular, due to the low computational cost and resource expenditure, the power supply may be provided directly on site with the imaging device 1100 not being connected to a power line. For example, the power supply required by the imaging device may be provided by renewable sources, for example a solar panel, or pre-charged batteries.

Advantageously, the imaging device is cost-effective in that it uses modules able to execute a method that optimizes the use of resources.

The system for operating on the environment 1000 comprises a plurality of environment sensors 1200 which are configured to capture one or more environment datasets Set2. Preferably, the plurality of sensors 1200 comprises one or more sets of ground sensors 1210, associated with the environment 10 and configured to be in communication with the imaging device 1100. Preferably, the sets of ground sensors 1210 are arranged in the selected environment 10 and/or in one or more environments available for selection. It should be noted that each set of ground sensors 1210 comprises signal communication means, for example Bluetooth means, configured to establish signal communication between the ground sensor 1210 and the imaging device 1100 when they are close to each other. This allows the first environment dataset Set2a captured by the set of ground sensors 1210 to be downloaded to the imaging device 1100. Specifically, each set of ground sensors 1210 is configured to connect and send the first environment dataset Set2a to an intermediate processing unit 1300, as described below.

According to a preferred embodiment, provided instead of or in addition to the previous one, the plurality of sensors 1200 comprise one or more sets of on-board sensors 1220, associated with the imaging device 1100 and in signal communication therewith. Specifically, the set of on-board sensors 1220 is in direct signal communication with the intermediate processing unit 1300. This allows the second environment dataset Set2a captured by the set of on-board sensors 1220 to be downloaded to the imaging device 1100.

. It should be noted that the sensors 1200 perform the detection of information shared by several environments such as geographic information (latitude and/or longitude) or weather information.

According to a preferred embodiment, the plurality of sensors 1200 comprise sensors for pressure, temperature, humidity, soil composition, time , absolute velocity of the imaging device 1100, relative velocity of the imaging device 1100 and the environment 10 or weather reference points in the environment.

The system for operating on the environment 1000 comprises an intermediate processing unit 1300 associated with the imaging device 1100 and in signal communication with the imaging devices 1100 and with the plurality of sensors 1200. Preferably, the intermediate processing unit 1400 is configured to generate environment signals Se as a function of the environment-representative signals Set 1 and of the environment datasets Set 2. **In** particular, the intermediate processing unit 1300 can aggregate environment-representative signals Set 1 and of the environment datasets 2 before sending them.

According to a preferred embodiment, the imaging device 1100 comprises the intermediate processing unit 1300.

The system for operating on the environment 1000 comprises a central processing unit 1400 in signal communication with the intermediate processing unit 1300 and configured to generate an action signal Sa and periodic environment monitoring signals Sm and to define the reference signals Sr, the comparison ranges Ic and the operation signals. Preferably, the central processing unit 1400 defines the time periods T1, T2, T3.

Preferably, the system for operating on the environment 1000 comprises a connection module 1800 configured to establish signal communication between the imaging device 1100 and the central processing unit 1400. According to a preferred embodiment, the connection module 1800 is associated with the environment 10, for example located in a farm associated with the environment 10, and is preferably configured as a router for connecting the imaging device 1100 and the central processing unit 1400, when the imaging device 1100 is in the vicinity of the connection module 1800. Alternatively, the imaging device 1100 comprises the connection module 1800, allowing direct and continuous connection with the central processing unit 1400.

According to a preferred embodiment, the system for operating on the environment 1000 comprises a storage unit 1900 for saving and storing the environment information as well as the signals and time periods generated and the operations, performed and not performed.

The system for operating on the environment 1000 comprises a control device 1600 preferably in signal communication with the intermediate processing unit 1300. In particular, the control device 1600 is configured to track the operations that can be and are performed on the environment as a function of the operation signals L representative of the list of operations. Preferably, the control device 1600 acts as a logbook for tracking of the operations that have been performed. Moreover, the control device 1600 generates the completion signals Sc1, Sc2 as a function of the confirmation signals.

According to a preferred embodiment, the control device 1600 may be a mobile device associated with an operator which is used by the operator to generate a confirmation signal for each operation that has been performed. For example, the control device 1600 may be a tablet or a smartphone. Alternatively, the control device 1600 may be part of the control means 1700.

In particular, the system for operating on the environment 1000 comprises control means 1700 in signal communication with the intermediate processing unit 1300 via the control device 1600 and configured to act on the environment 10. Preferably, the control means 1700 comprise a vehicle designed to be moved inside the selected environment in response to a manual control by an operator and/or an automatic control based on the action signal Sa, the monitoring signal Sm and the operation signals. More preferably, the control means 1700 comprise one or more mechanical arms for operating on the environment as a function of the operation signals L.

According to a preferred embodiment, one or more imaging devices 1100 are associated with the control means 1700 to be moved therewith and to capture image streams of the environment.

For example, the control means 1700 comprise a tractor and the imaging device 1100 is mounted thereon.

Instead of or in addition to the above, the control means 1700 may comprise action devices associated with the control device 1600 and adapted to be associated with a user, for example a farmer or a worker, to receive the operation signals and then perform the corresponding operation/s.

The system for operating on the environment 1000 comprises a user interface 1500 in signal communication with the central processing unit 1400 and configured to act on the central processing unit 1400. Preferably, the user interface 1500 comprises, for example, a computer in signal communication with the central processing unit 1400 via the Internet or a wired network.

## Claims

1. A method (100) of operating on an environment using a system (1000) comprising imaging devices (1100), a plurality of sensors (1200) configured to capture information from an environment (10), an intermediate processing unit (1300) associated with the environment (10) and a central processing unit (1400) configured to determine an operation on the environment as a function of the environment information (10) that has been captured, the method comprising the steps of:
a) selecting at least one environment to be controlled (10);
b) capturing, by means of at least one imaging device (1100), one or more image streams of targets (20) in the environment (10), ;
c) generating, by means of at least one imaging device (1100), one or more environment-representative signals (Set1) as a function of the image streams that have been captured;
d) capturing, by means of the plurality of sensors (1200), one or more environment datasets (Set2);
e) sending the environment-representative signals (Set1) and the environment datasets (Set2) to the intermediate processing unit (1300) associated with the imaging device (1100) and in signal communication with the plurality of sensors (1200) and the imaging device (1100);
f) generating an environment signal (Se) as a function of the representative signals (Set1) and the environment dataset (Set2);
g) sending the environment signal (Se) to the central processing unit (1400) in signal communication with the intermediate processing unit (1300),
h) comparing the environment signal (Se) with reference signals (Sr) associated with the selected environment (10); **characterised by** said step h) comprising a step of h1) defining as a function of the reference signals (Sr) associated with the selected environment comparison ranges (Ic) representative of target and environment features and a step h2) of comparing the environment signal (Se) with the comparison ranges (Ic)
i) generating, using data processing algorithms residing in the central processing unit (1400), as a function of the comparison between the environment signal (Se) and the reference signals (Sr):
- an action signal (Sa) representative of an operation to be performed on the selected environment (10); or
- a periodic environment monitoring signal (Sm);
l) generating, by the central processing unit (1400), a plurality of operation signals (L) representative of operations to be performed on the environment (10), said plurality of operation signals (L) being generated as a function of the environment signal (Se) generated if an action signal (Sa) is generated by selecting from a plurality of predetermined operation signals, representative of known operations that can be performed on the relative environment, one or more signals as a function of the comparison between the environment signal (Se) and the comparison ranges (Ic); the step l) of determining a plurality of operation signals comprising the steps of:
l1) sending the plurality of operation signals (L) to a control device (1600)
l2) controlling control means (1700) in signal communication with the control device (1600) and configured to act on the environment by means of the plurality of operation signals (L) to perform one or more operations respectively associated with the operation signals (L) being configured to be automatically controlled by operation signals (L), said operation signals (L) comprising a list of instructions for instructing the control means (1700) to operate on an environment;
l3) control means (1700) automatically generating the confirmation signal (Scon) by means of the control device (1600), said confirmation signal (Scon) being representative of each operation signal associated with an operation performed m) generating, by a control device (1600) or the intermediate processing unit (1300) in signal communication with the central processing unit (1400), a first activity completion signal (Sc1) as a function of a confirmation signal (Scon) generated by the control device (1600) for each operation signal of the plurality of operation signals (L);
n) generating, by a control device (1600) or the intermediate processing unit (1300) in signal communication with the central processing unit (1400), a second activity completion signal (Sc2) if a confirmation signal (Scon) has been generated for part of the operation signals of the plurality of operation signals (L), ;
o) repeating the steps b)-i) according to a first time period (T1) if a first completion signal (Sc1) has been generated;
p) repeating the steps b)-i) according to a second time period (T2) if a second completion signal (Sc2) has been generated;
q) repeating the steps b)-i) according to a third time period (T3) if a periodic environment monitoring signal (Sm) is generated.

2. A method (100) of operating on an environment as claimed in claim 1, wherein the step c) of generating an environment-representative signal comprises the steps of:
c1) recognizing targets (20) arranged in the environment (10) from the image streams that have been captured;
c2) generating count values for the recognized targets; and/or
c3) calculating size values for the recognized targets, and/or
c4) calculating relative distance values between the recognized targets;
c5) defining the environment-representative signal (Set1) as a function of the count values and/or the size values and/or the relative distance values.

3. A method (100) of operating on an environment as claimed in claim 1 or 2, wherein the one or more environment datasets (Set2) that have been captured during step d) comprise pressure values, temperature values, humidity values, time information, geographic information, weather information and relative velocity values between the imaging device and reference points in the environment.

4. A method (100) of operating on an environment (100) as claimed in any of claims 1 to 3, wherein the step f) of generating an environment signal (Se) comprises the steps of:
f1) selecting one or more of the received environment datasets (Set2);
f2) associating the one or more selected environment datasets (Set2) with the environment-representative signal (Set1);
f3) defining the environment signal (Se) as a function of the association between the environment-representative signal (Set1) and the one or more selected environment datasets (Set2).

5. A method (100) of operating on an environment as claimed in any of claims 1 to 4, wherein the method (100) of operating on an environment comprises a step r) of defining the reference signals, the step of defining the reference signals comprising the steps of:
- loading, by means of a user interface (1500), the reference signals (Sr) into the central processing unit (1400); and/or
- generating the reference signals (Sr), using algorithms residing in the central processing unit (1500), as a function of at least the environment signals Se associated with the selected environment and/or with additional environments.

6. A method (100) of operating on an environment as claimed in any of claims 1 to 5, wherein the method (100) of operating on an environment comprises the step of defining the data processing algorithms residing in the central processing unit (1400), the step of defining the data processing algorithms comprising the step of:
- loading, by means of a user interface (1500), one or more data processing algorithms into the central processing unit (1400).

7. A method (100) of operating on an environment as claimed in any claims 1 to 6, wherein:
- the step m) is generating a first completion signal (Sc1) if a confirmation signal (Scon) has been generated for each operation signal (L);
- the step n) is generating a second completion signal (Sc2) if a confirmation signal (Scon) has been generated for some of the operation signals (L).

8. A method of operating on an environment (100) as claimed in any of claims 1 to 7, wherein the method (100) of operating on an environment comprises a step of storing at least the environment signals (Se) and organizing them as a function of the selected environment (10) and time parameters, the step of storing comprising a step of defining a database for generating the action signals (Sa) and a periodic environment monitoring signal (Sm),

9. A system (1000) for operating on an environment configured to carry out the method of operating on an environment as claimed in claims 1 to 8 and comprising:
- one or more imaging devices (1100) configured to capture image streams of the environment (10),
- a data processing unit (1110) configured to generate environment-representative signals and in signal communication with the imaging device (1100);
- a plurality of environment sensors (1200) configured to capture one or more environment datasets (10);
- an intermediate processing unit (1300) associated with the imaging device (1100) and in signal communication with the imaging device (1100) and the plurality of sensors (1200); the intermediate processing unit (1400) being configured to generate environment signals (Se) as a function of the environment-representative signals of the environment (Set1) and the environment datasets (Set2);
- a central processing unit (1400) in signal communication with the intermediate processing unit (1300) and configured to generate action signals (Sa) and periodic environment monitoring signals (Sm);
- a control device (1600) configured to generate confirmation signals (Scon) and in signal communication with the intermediate processing unit (1300);
- control means (1700) in signal communication with the intermediate processing unit (1300) via the control device (1600) and configured to act on the environment (10);
- a user interface (1500) in signal communication with the central processing unit (1400) and configured to act on the central processing unit (1400).

## Patentansprüche

1. Ein Verfahren (100) zum Einwirken auf eine Umgebung unter Verwendung eines Systems (1000), umfassend Bildgebungsvorrichtungen (1100), eine Vielzahl von Sensoren (1200), die konfiguriert sind, um Informationen von einer Umgebung (10) zu erfassen, eine zwischengeschaltete Verarbeitungseinheit (1300), die der Umgebung (10) zugeordnet ist, und eine zentrale Verarbeitungseinheit (1400), die konfiguriert ist, um eine Einwirkung auf die Umgebung in Abhängigkeit von den erfassten Umgebungsinformationen (10) zu bestimmen, wobei das Verfahren die folgenden Schritte umfasst:
a) Auswählen mindestens einer zu steuernden Umgebung (10);
b) Erfassen, mittels mindestens einer Bildgebungsvorrichtung (1100), eines oder mehrerer Bildströme von Zielen (20) in der Umgebung (10);
c) Erzeugen, mittels mindestens einer Bildgebungsvorrichtung (1100), eines oder mehrerer umgebungsrepräsentativer Signale (Set1) in Abhängigkeit von den erfassten Bildströmen;
d) Erfassen, mittels der Vielzahl von Sensoren (1200), eines oder mehrerer Umgebungsdatensätze (Set2);
e) Sendender umgebungsrepräsentativen Signale (Set1) und der Umgebungsdatensätze (Set2) an die zwischengeschaltete Verarbeitungseinheit (1300), die der Bildgebungsvorrichtung (1100) zugeordnet ist und in Signalkommunikation mit der Vielzahl von Sensoren (1200) und der Bildgebungsvorrichtung (1100) steht;
f) Erzeugen eines Umgebungssignals (Se) in Abhängigkeit von den umgebungsrepräsentativen Signalen (Set1) und dem Umgebungsdatensatz (Set2);
g) Senden des Umgebungssignals (Se) an die zentrale Verarbeitungseinheit (1400), die in Signalkommunikation mit der zwischengeschalteten Verarbeitungseinheit (1300) steht;
h) Vergleichen des Umgebungssignals (Se) mit Referenzsignalen (Sr), die der ausgewählten Umgebung (10) zugeordnet sind;
wobei der Schritt h) einen Schritt h1) des Definierens von Vergleichsbereichen (Ic), die für Ziel- und Umgebungsmerkmale repräsentativ sind, in Abhängigkeit von den der ausgewählten Umgebung zugeordneten Referenzsignalen (Sr) und einen Schritt h2) des Vergleichens des Umgebungssignals (Se) mit den Vergleichsbereichen (Ic) umfasst;
i) Erzeugen, unter Verwendung von in der zentralen Verarbeitungseinheit (1400) befindlichen Datenverarbeitungsalgorithmen, in Abhängigkeit von dem Vergleich zwischen dem Umgebungssignal (Se) und den Referenzsignalen (Sr):
- eines Aktionssignals (Sa), das für eine an der ausgewählten Umgebung (10) durchzuführende Operation repräsentativ ist; oder
- eines periodischen Umgebungsüberwachungssignals (Sm);
l) Erzeugen, durch die zentrale Verarbeitungseinheit (1400), einer Vielzahl von Operationssignalen (L), die für auf die Umgebung (10) durchzuführende Operationen repräsentativ sind, wobei die Vielzahl von Operationssignalen (L) in Abhängigkeit von dem Umgebungssignal (Se) erzeugt wird, wenn ein Aktionssignal (Sa) erzeugt wird, durch Auswählen eines oder mehrerer Signale aus einer Vielzahl von vorbestimmten Operationssignalen, die für bekannte Operationen repräsentativ sind, die auf die relative Umgebung durchgeführt werden können, in Abhängigkeit von dem Vergleich zwischen dem Umgebungssignal (Se) und den Vergleichsbereichen (Ic); wobei der Schritt l) des Bestimmens einer Vielzahl von Operationssignalen die Schritte umfasst:
l1) Senden der Vielzahl von Operationssignalen (L) an eine Steuervorrichtung (1600);
l2) Steuern von Steuermitteln (1700), die in Signalkommunikation mit der Steuervorrichtung (1600) stehen und konfiguriert sind, um auf die Umgebung mittels der Vielzahl von Operationssignalen (L) einzuwirken, um eine oder mehrere Operationen durchzuführen, die jeweils den Operationssignalen (L) zugeordnet sind, die konfiguriert sind, um automatisch durch Operationssignale (L) gesteuert zu werden, wobei die Operationssignale (L) eine Liste von Anweisungen umfassen, um die Steuermittel (1700) anzuweisen, auf eine Umgebung einzuwirken;
l3) automatisches Erzeugen des Bestätigungssignals (Scon) durch die Steuermittel (1700) mittels der Steuervorrichtung (1600), wobei das Bestätigungssignal (Scon) für jedes Operationssignal repräsentativ ist, das mit einer durchgeführten Operation verbunden ist;
m) Erzeugen, durch eine Steuervorrichtung (1600) oder die zwischengeschaltete Verarbeitungseinheit (1300), die in Signalkommunikation mit der zentralen Verarbeitungseinheit (1400) steht, eines ersten Aktivitätsabschlusssignals (Scl) in Abhängigkeit von einem Bestätigungssignal (Scon), das von der Steuervorrichtung (1600) für jedes Operationssignal der Vielzahl von Operationssignalen (L) erzeugt wird;
n) Erzeugen, durch eine Steuervorrichtung (1600) oder die zwischengeschaltete Verarbeitungseinheit (1300), die in Signalkommunikation mit der zentralen Verarbeitungseinheit (1400) steht, eines zweiten Aktivitätsabschlusssignals (Sc2), wenn ein Bestätigungssignal (Scon) für einen Teil der Operationssignale der Vielzahl von Operationssignalen (L) erzeugt wurde;
o) Wiederholen der Schritte b)-i) gemäß einer ersten Zeitperiode (T1), wenn ein erstes Abschlusssignal (Sc1) erzeugt wurde;
p) Wiederholen der Schritte b)-i) gemäß einer zweiten Zeitperiode (T2), wenn ein zweites Abschlusssignal (Sc2) erzeugt wurde;
q) Wiederholen der Schritte b)-i) gemäß einer dritten Zeitperiode (T3), wenn ein periodisches Umgebungsüberwachungssignal (Sm) erzeugt wird.

2. Ein Verfahren (100) zum Einwirken auf eine Umgebung nach Anspruch 1, wobei der Schritt c) des Erzeugens eines umgebungsrepräsentativen Signals die Schritte umfasst:
c1) Erkennen von Zielen (20), die in der Umgebung (10) angeordnet sind, aus den erfassten Bildströmen;
c2) Erzeugen von Zählwerten für die erkannten Ziele; und/oder c3) Berechnen von Größenwerten für die erkannten Ziele, und/oder c4) Berechnen von relativen Abstandswerten zwischen den erkannten Zielen;
c5) Definieren des umgebungsrepräsentativen Signals (Set1) in Abhängigkeit von den Zählwerten und/oder den Größenwerten und/oder den relativen Abstandswerten.

3. Ein Verfahren (100) zum Einwirken auf eine Umgebung nach Anspruch 1 oder 2, wobei der eine oder die mehreren Umgebungsdatensätze (Set2), die während des Schritts d) erfasst wurden, Druckwerte, Temperaturwerte, Feuchtigkeitswerte, Zeitinformationen, geografische Informationen, Wetterinformationen und relative Geschwindigkeitswerte zwischen der Bildgebungsvorrichtung und Referenzpunkten in der Umgebung umfassen.

4. Ein Verfahren (100) zum Einwirken auf eine Umgebung (100) nach einem der Ansprüche 1 bis 3, wobei der Schritt f) des Erzeugens eines Umgebungssignals (Se) die Schritte umfasst:
f1) Auswählen eines oder mehrerer der empfangenen Umgebungsdatensätze (Set2);
f2) Zuordnen des einen oder der mehreren ausgewählten Umgebungsdatensätze (Set2) zu dem umgebungsrepräsentativen Signal (Set1);
f3) Definieren des Umgebungssignals (Se) in Abhängigkeit von der Zuordnung zwischen dem umgebungsrepräsentativen Signal (Set1) und dem einen oder den mehreren ausgewählten Umgebungsdatensätzen (Set2).

5. Ein Verfahren (100) zum Einwirken auf eine Umgebung nach einem der Ansprüche 1 bis 4, wobei das Verfahren (100) zum Einwirken auf eine Umgebung einen Schritt r) des Definierens der Referenzsignale umfasst, wobei der Schritt des Definierens der Referenzsignale die Schritte umfasst:
- Laden, mittels einer Benutzeroberfläche (1500), der Referenzsignale (Sr) in die zentrale Verarbeitungseinheit (1400); und/oder
- Erzeugen der Referenzsignale (Sr) unter Verwendung von in der zentralen Verarbeitungseinheit (1400) befindlichen Algorithmen in Abhängigkeit von mindestens den Umgebungssignalen Se, die der ausgewählten Umgebung und/oder zusätzlichen Umgebungen zugeordnet sind.

6. Ein Verfahren (100) zum Einwirken auf eine Umgebung nach einem der Ansprüche 1 bis 5, wobei das Verfahren (100) zum Einwirken auf eine Umgebung den Schritt des Definierens der in der zentralen Verarbeitungseinheit (1400) befindlichen Datenverarbeitungsalgorithmen umfasst, wobei der Schritt des Definierens der Datenverarbeitungsalgorithmen den Schritt umfasst:
- Laden, mittels einer Benutzeroberfläche (1500), eines oder mehrerer Datenverarbeitungsalgorithmen in die zentrale Verarbeitungseinheit (1400).

7. Ein Verfahren (100) zum Einwirken auf eine Umgebung nach einem der Ansprüche 1 bis 6, wobei:
- der Schritt m) das Erzeugen eines ersten Abschlusssignals (Sc1) ist, wenn ein Bestätigungssignal (Scon) für jedes Operationssignal (L) erzeugt wurde;
- der Schritt n) das Erzeugen eines zweiten Abschlusssignals (Sc2) ist, wenn ein Bestätigungssignal (Scon) für einige der Operationssignale (L) erzeugt wurde.

8. Ein Verfahren zum Einwirken auf eine Umgebung (100) nach einem der Ansprüche 1 bis 7, wobei das Verfahren (100) zum Einwirken auf eine Umgebung einen Schritt des Speicherns mindestens der Umgebungssignale (Se) und deren Organisation in Abhängigkeit von der ausgewählten Umgebung (10) und Zeitparametern umfasst, wobei der Schritt des Speicherns einen Schritt des Definierens einer Datenbank zum Erzeugen der Aktionssignale (Sa) und eines periodischen Umgebungsüberwachungssignals (Sm) umfasst.

9. Ein System (1000) zum Einwirken auf eine Umgebung, das konfiguriert ist, um das Verfahren zum Einwirken auf eine Umgebung nach den Ansprüchen 1 bis 8 auszuführen und Folgendes umfasst:
- eine oder mehrere Bildgebungsvorrichtungen (1100), die konfiguriert sind, um Bildströme der Umgebung (10) zu erfassen,
- eine Datenverarbeitungseinheit (1110), die konfiguriert ist, um umgebungsrepräsentative Signale zu erzeugen und in Signalkommunikation mit der Bildgebungsvorrichtung (1100) steht;
- eine Vielzahl von Umgebungssensoren (1200), die konfiguriert sind, um einen oder mehrere Umgebungsdatensätze (10) zu erfassen;
- eine zwischengeschaltete Verarbeitungseinheit (1300), die der Bildgebungsvorrichtung (1100) zugeordnet ist und in Signalkommunikation mit der Bildgebungsvorrichtung (1100) und der Vielzahl von Sensoren (1200) steht; wobei die zwischengeschaltete Verarbeitungseinheit (1300) konfiguriert ist, um Umgebungssignale (Se) in Abhängigkeit von den umgebungsrepräsentativen Signalen der Umgebung (Set1) und den Umgebungsdatensätzen (Set2) zu erzeugen;
- eine zentrale Verarbeitungseinheit (1400), die in Signalkommunikation mit der zwischengeschalteten Verarbeitungseinheit (1300) steht und konfiguriert ist, um Aktionssignale (Sa) und periodische Umgebungsüberwachungssignale (Sm) zu erzeugen;
- eine Steuervorrichtung (1600), die konfiguriert ist, um Bestätigungssignale (Scon) zu erzeugen und in Signalkommunikation mit der zwischengeschalteten Verarbeitungseinheit (1300) steht;
- Steuermittel (1700), die über die Steuervorrichtung (1600) in Signalkommunikation mit der zwischengeschalteten Verarbeitungseinheit (1300) stehen und konfiguriert sind, um auf die Umgebung (10) einzuwirken;
- eine Benutzeroberfläche (1500), die in Signalkommunikation mit der zentralen Verarbeitungseinheit (1400) steht und konfiguriert ist, um auf die zentrale Verarbeitungseinheit (1400) einzuwirken.

## Revendications

1. Procédé (100) d'opération sur un environnement utilisant un système (1000) comprenant des dispositifs d'imagerie (1100), une pluralité de capteurs (1200) configurés pour capturer des informations d'un environnement (10), une unité de traitement intermédiaire (1300) associée à l'environnement (10) et une unité de traitement centrale (1400) configurée pour déterminer une opération sur l'environnement en fonction des informations d'environnement (10) qui ont été capturées, le procédé comprenant les étapes consistant à :
a) sélectionner au moins un environnement à contrôler (10) ;
b) capturer, au moyen d'au moins un dispositif d'imagerie (1100), un ou plusieurs flux d'images de cibles (20) dans l'environnement (10) ;
c) générer, au moyen d'au moins un dispositif d'imagerie (1100), un ou plusieurs signaux représentatifs de l'environnement (Set1) en fonction des flux d'images qui ont été capturés ;
d) capturer, au moyen de la pluralité de capteurs (1200), un ou plusieurs ensembles de données d'environnement (Set2) ;
e) envoyer les signaux représentatifs de l'environnement (Set1) et les ensembles de données d'environnement (Set2) à l'unité de traitement intermédiaire (1300) associée au dispositif d'imagerie (1100) et en communication de signal avec la pluralité de capteurs (1200) et le dispositif d'imagerie (1100) ;
f) générer un signal d'environnement (Se) en fonction des signaux représentatifs (Set1) et de l'ensemble de données d'environnement (Set2) ;
g) envoyer le signal d'environnement (Se) à l'unité de traitement centrale (1400) en communication de signal avec l'unité de traitement intermédiaire (1300) ;
h) comparer le signal d'environnement (Se) à des signaux de référence (Sr) associés à l'environnement sélectionné (10) ;
ladite étape h) comprenant une étape h1) de définition, en fonction des signaux de référence (Sr) associés à l'environnement sélectionné, de plages de comparaison (Ic) représentatives de caractéristiques de cible et d'environnement et une étape h2) de comparaison du signal d'environnement (Se) avec les plages de comparaison (Ic) ;
i) générer, en utilisant des algorithmes de traitement de données résidant dans l'unité de traitement centrale (1400), en fonction de la comparaison entre le signal d'environnement (Se) et les signaux de référence (Sr) :
- un signal d'action (Sa) représentatif d'une opération à effectuer sur l'environnement sélectionné (10) ; ou
- un signal de surveillance périodique de l'environnement (Sm) ;
l) générer, par l'unité de traitement centrale (1400), une pluralité de signaux d'opération (L) représentatifs d'opérations à effectuer sur l'environnement (10), ladite pluralité de signaux d'opération (L) étant générée en fonction du signal d'environnement (Se) si un signal d'action (Sa) est généré en sélectionnant parmi une pluralité de signaux d'opération prédéterminés, représentatifs d'opérations connues qui peuvent être effectuées sur l'environnement relatif, un ou plusieurs signaux en fonction de la comparaison entre le signal d'environnement (Se) et les plages de comparaison (Ic) ; l'étape l) de détermination d'une pluralité de signaux d'opération comprenant les étapes consistant à :
l1) envoyer la pluralité de signaux d'opération (L) à un dispositif de commande (1600) ;
l2) commander des moyens de commande (1700) en communication de signal avec le dispositif de commande (1600) et configurés pour agir sur l'environnement au moyen de la pluralité de signaux d'opération (L) pour effectuer une ou plusieurs opérations respectivement associées aux signaux d'opération (L) étant configurés pour être commandés automatiquement par des signaux d'opération (L), lesdits signaux d'opération (L) comprenant une liste d'instructions pour ordonner aux moyens de commande (1700) d'opérer sur un environnement ;
l3) les moyens de commande (1700) générant automatiquement le signal de confirmation (Scon) au moyen du dispositif de commande (1600), ledit signal de confirmation (Scon) étant représentatif de chaque signal d'opération associé à une opération effectuée ;
m) générer, par un dispositif de commande (1600) ou l'unité de traitement intermédiaire (1300) en communication de signal avec l'unité de traitement centrale (1400), un premier signal d'achèvement d'activité (Sc1) en fonction d'un signal de confirmation (Scon) généré par le dispositif de commande (1600) pour chaque signal d'opération de la pluralité de signaux d'opération (L) ;
n) générer, par un dispositif de commande (1600) ou l'unité de traitement intermédiaire (1300) en communication de signal avec l'unité de traitement centrale (1400), un second signal d'achèvement d'activité (Sc2) si un signal de confirmation (Scon) a été généré pour une partie des signaux d'opération de la pluralité de signaux d'opération (L) ;
o) répéter les étapes b)-i) selon une première période de temps (T1) si un premier signal d'achèvement (Sc1) a été généré ;
p) répéter les étapes b)-i) selon une seconde période de temps (T2) si un second signal d'achèvement (Sc2) a été généré ;
q) répéter les étapes b)-i) selon une troisième période de temps (T3) si un signal de surveillance périodique de l'environnement (Sm) est généré.

2. Procédé (100) d'opération sur un environnement selon la revendication 1, dans lequel l'étape c) de génération d'un signal représentatif de l'environnement comprend les étapes consistant à :
c1) reconnaître des cibles (20) agencées dans l'environnement (10) à partir des flux d'images qui ont été capturés ;
c2) générer des valeurs de comptage pour les cibles reconnues ; et/ou c3) calculer des valeurs de taille pour les cibles reconnues, et/ou c4) calculer des valeurs de distance relative entre les cibles reconnues ;
c5) définir le signal représentatif de l'environnement (Set1) en fonction des valeurs de comptage et/ou des valeurs de taille et/ou des valeurs de distance relative.

3. Procédé (100) d'opération sur un environnement selon la revendication 1 ou 2, dans lequel le ou les ensembles de données d'environnement (Set2) qui ont été capturés pendant l'étape d) comprennent des valeurs de pression, des valeurs de température, des valeurs d'humidité, des informations temporelles, des informations géographiques, des informations météorologiques et des valeurs de vitesse relative entre le dispositif d'imagerie et des points de référence dans l'environnement.

4. Procédé (100) d'opération sur un environnement (100) selon l'une quelconque des revendications 1 à 3, dans lequel l'étape f) de génération d'un signal d'environnement (Se) comprend les étapes consistant à :
f1) sélectionner un ou plusieurs des ensembles de données d'environnement reçus (Set2) ;
f2) associer le ou les ensembles de données d'environnement sélectionnés (Set2) avec le signal représentatif de l'environnement (Set1) ;
f3) définir le signal d'environnement (Se) en fonction de l'association entre le signal représentatif de l'environnement (Set1) et le ou les ensembles de données d'environnement sélectionnés (Set2).

5. Procédé (100) d'opération sur un environnement selon l'une quelconque des revendications 1 à 4, dans lequel le procédé (100) d'opération sur un environnement comprend une étape r) de définition des signaux de référence, l'étape de définition des signaux de référence comprenant les étapes consistant à :
- charger, au moyen d'une interface utilisateur (1500), les signaux de référence (Sr) dans l'unité de traitement centrale (1400) ; et/ou
- générer les signaux de référence (Sr), en utilisant des algorithmes résidant dans l'unité de traitement centrale (1500), en fonction d'au moins les signaux d'environnement Se associés à l'environnement sélectionné et/ou à des environnements supplémentaires.

6. Procédé (100) d'opération sur un environnement selon l'une quelconque des revendications 1 à 5, dans lequel le procédé (100) d'opération sur un environnement comprend l'étape de définition des algorithmes de traitement de données résidant dans l'unité de traitement centrale (1400), l'étape de définition des algorithmes de traitement de données comprenant l'étape consistant à :
- charger, au moyen d'une interface utilisateur (1500), un ou plusieurs algorithmes de traitement de données dans l'unité de traitement centrale (1400).

7. Procédé (100) d'opération sur un environnement selon l'une quelconque des revendications 1 à 6, dans lequel :
- l'étape m) consiste à générer un premier signal d'achèvement (Sc1) si un signal de confirmation (Scon) a été généré pour chaque signal d'opération (L) ;
- l'étape n) consiste à générer un second signal d'achèvement (Sc2) si un signal de confirmation (Scon) a été généré pour certains des signaux d'opération (L).

8. Procédé d'opération sur un environnement (100) selon l'une quelconque des revendications 1 à 7, dans lequel le procédé (100) d'opération sur un environnement comprend une étape de stockage d'au moins les signaux d'environnement (Se) et de leur organisation en fonction de l'environnement sélectionné (10) et de paramètres temporels, l'étape de stockage comprenant une étape de définition d'une base de données pour générer les signaux dd'action (Sa) et un signal de surveillance périodique de l'environnement (Sm).

9. Système (1000) d'opération sur un environnement configuré pour mettre en œuvre le procédé d'opération sur un environnement tel que revendiqué dans les revendications 1 à 8 et comprenant :
- un ou plusieurs dispositifs d'imagerie (1100) configurés pour capturer des flux d'images de l'environnement (10),
- une unité de traitement de données (1110) configurée pour générer des signaux représentatifs de l'environnement et en communication de signal avec le dispositif d'imagerie (1100) ;
- une pluralité de capteurs d'environnement (1200) configurés pour capturer un ou plusieurs ensembles de données d'environnement (10) ;
- une unité de traitement intermédiaire (1300) associée au dispositif d'imagerie (1100) et en communication de signal avec le dispositif d'imagerie (1100) et la pluralité de capteurs (1200) ; l'unité de traitement intermédiaire (1400) étant configurée pour générer des signaux d'environnement (Se) en fonction des signaux représentatifs de l'environnement (Set1) et des ensembles de données d'environnement (Set2) ;
- une unité de traitement centrale (1400) en communication de signal avec l'unité de traitement intermédiaire (1300) et configurée pour générer des signaux d'action (Sa) et des signaux de surveillance périodique de l'environnement (Sm) ;
- un dispositif de commande (1600) configuré pour générer des signaux de confirmation (Scon) et en communication de signal avec l'unité de traitement intermédiaire (1300) ;
- des moyens de commande (1700) en communication de signal avec l'unité de traitement intermédiaire (1300) via le dispositif de commande (1600) et configurés pour agir sur l'environnement (10) ;
- une interface utilisateur (1500) en communication de signal avec l'unité de traitement centrale (1400) et configurée pour agir sur l'unité de traitement centrale (1400).
